# FASCICULE DE BREVET EUROPEEN

(11) **EP 2 460 383 B1**
(45) Date de publication et mention de la délivrance du brevet: **30.05.2018**
(21) Numéro de dépôt: 10735301.3
(22) Date de dépôt: 30.07.2010
(51) Int. Cl.: H04W 72/04

(54) **METHODE D'ACCES MULTIPLE AUX RESSOURCES RADIO DANS UN RESAU AD HOC MOBILE ET SYSTEME METTANT EN OEUVRE LA METHODE**
VERFAHREN FÜR MEHRFACHZUGANG ZU FUNKRESSOURCEN IN EINEM MOBILEN AD-HOC-NETZWERK UND SYSTEM ZUR UMSETZUNG DIESES VERFAHRENS
METHOD FOR MULTIPLE ACCESS TO RADIO RESOURCES IN A MOBILE AD HOC NETWORK AND SYSTEM IMPLEMENTING SAID METHOD

(30) Priorité: 31.07.2009 FR 0903794
(43) Date de publication de la demande: 06.06.2012
(73) Titulaire: THALES, 92400 Courbevoie (FR)
(72) Inventeur: MONZAT DE SAINT JULIEN, Gilles, F-92700 Colombes (FR); CARRERE, Patrice, F-92700 Colombes (FR)
(74) Mandataire: Lucas, Laurent Jacques
(86) Numéro de dépôt international: PCT/EP2010/061097
(87) Numéro de publication internationale: WO 2011/012694

(56) Documents cités:
- WO-A2-2007/092931
- US-A1- 2002 176 385
- US-A1- 2006 234 717
- AGARWAL S ET AL: "DISTRIBUTED POWER CONTROL IN AD-HOC WIRELESS NETWORKS" 30 septembre 2001 (2001-09-30), IEEE INTERNATIONAL SYMPOSIUM ON PERSONAL, INDOOR AND MOBILERADIO COMMUNICATIONS, XX, XX, PAGE(S) F - 59 , XP008036250 partie II, C

## Description

La présente invention concerne une méthode d'accès multiple aux ressources radio dans un réseau ad-hoc mobile, par exemple un réseau haut-débit et à faible latence, ainsi que le système mettant en oeuvre cette méthode.

Elle s'applique avantageusement dans un contexte aéronautique ou les noeuds du réseau ad-hoc sont des aéronefs mais peut être mise en oeuvre pour tout type de réseau ad-hoc mobile. On entend par réseau adhoc, un réseau constitué d'éléments mobiles, encore appelés noeuds, qui cumulent à la fois les fonctions d'émetteur, de récepteur et de relais. Chaque noeud d'un réseau ad-hoc communique directement avec ses voisins sans passer par un point d'accès intermédiaire qui aurait la fonction de relais ou/et de routage des paquets transmis comme cela est le cas dans un réseau dit en mode infrastructure. Un réseau ad-hoc offre une topologie de type maillée. Dans la suite de la description, on appellera noeud d'un réseau tout terminal mobile communiquant à travers une liaison sans fils avec d'autres terminaux mobiles organisés et structurés au sein d'un réseau maillé. Un noeud est par exemple, mais pas seulement, un aéronef, ou un avion sans pilote qui embarque un système de télécommunications mettant en oeuvre la méthode d'accès à des ressources radio selon l'invention.

A titre d'exemple, un réseau en mode infrastructure est un réseau de téléphonie mobile de type UMTS (« Universal Mobile Télécommunications System »). Ce type de réseau est constitué d'une part de terminaux mobiles qui ont une fonction d'émetteur et de récepteur, et d'autre part de points d'accès fixes qui ont une fonction de relais des messages d'une cellule vers une autre. Un réseau ad-hoc, au contraire, n'est constitué que de noeuds mobiles et ne nécessite pas la mise en oeuvre d'infrastructures fixes pour exécuter la fonctionnalité de routage de l'information transmise.

Un des problèmes rencontrés pour mettre en oeuvre un système de transmission de données au sein d'un réseau mobile ad-hoc est celui du partage efficace des ressources spectrales dans le but d'offrir à tous les utilisateurs un accès rapide au médium de communication, pour des communications haut débit ou discrètes.
L'art antérieur décrit plusieurs méthodes d'accès multiples qui permettent à plusieurs terminaux connectés au même médium de transmission, de partager la bande passante disponible sans interférer les uns avec les autres.
Une première méthode d'accès multiple existante est la méthode d'accès multiple à répartition dans le temps ou en anglais TDMA (« Time Division Multiple Access »). Cette méthode permet à tous les utilisateurs de communiquer sur une même fréquence donnée en leur allouant des segments temporels pendant lesquels ils peuvent transmettre (respectivement recevoir) des données. Cette méthode est notamment utilisée dans le système de téléphonie cellulaire européen GSM (« Global System for Mobile communications). Un inconvénient de la méthode d'accès multiple TDMA est que le temps d'accès au médium pour un utilisateur est contraint à l'attente d'un segment temporel qui a été alloué à cet utilisateur. Ce délai de transmission engendre alors un temps de latence potentiellement important. Un second inconvénient de cette méthode d'accès est qu'un temps de garde doit être introduit entre chaque segment temporel pour prendre en compte le temps de propagation du signal, afin d'éviter que deux utilisateurs distincts interfèrent l'un sur l'autre. Le temps de garde est dimensionné en fonction des distances maximales entre les utilisateurs. L'introduction de temps de garde engendre alors une diminution de la bande passante disponible.
Une deuxième méthode d'accès multiple connue est la méthode d'accès multiple par répartition en fréquence ou en anglais FDMA (« Frequency Division Multiple Access »). Cette méthode permet de partager une plage de fréquence entre plusieurs utilisateurs en allouant à chaque utilisateur une ou plusieurs bandes de fréquences dans lesquelles il est autorisé à communiquer. Un inconvénient de la méthode d'accès multiple FDMA est qu'une bande de garde doit être introduite entre chaque bande de fréquence afin d'éviter que deux utilisateurs distincts interfèrent l'un sur l'autre. La taille des bandes de garde est dimensionnée en fonction de la performance des filtres passe-bande et de la vitesse relative maximale entre utilisateur (effet Doppler). L'introduction de bandes de garde engendre également une diminution de la bande passante disponible.
Une troisième méthode d'accès multiple est la méthode d'accès multiple par répartition en code ou en anglais CDMA (« Code Division Multiple Access »). Cette méthode est basée sur les techniques connues d'étalement de spectre par séquence directe. Cette méthode permet à tous les utilisateurs de communiquer sur une même fréquence donnée en leur allouant des codes orthogonaux utilisés pour étaler et dés-étaler le signal utile. Cependant, la méthode d'accès CDMA présente une limitation dans le cadre d'un réseau ad hoc mobile. Elle est sensible au problème connu de « l'effet proche-loin » ou en anglais « near-far effect ». Ce problème intervient lorsqu'un terminal émet à forte puissance en direction d'un terminal lointain, ce signal saturant alors les terminaux plus proches.
On distingue le CDMA synchrone, qui utilise des codes parfaitement orthogonaux (par exemple des codes de Walsh), du CDMA asynchrone, qui utilise des codes basés sur des séquences PN (« Pseudo Noise ») connus sous l'appellation PN codes en anglais (par exemple des codes de Gold ou de Kasami).
Une quatrième méthode d'accès multiple est décrite dans la demande de brevet américaine US 2006/234717.

Un autre problème soulevé lorsqu'on cherche à déployer un réseau ad hoc mobile est la spécification du type d'antennes utilisées. Afin de garantir une liaison à très haut débit, c'est-à-dire de l'ordre de 100 Mbits/s, entre deux terminaux du réseau et ce avec une portée maximale, il est préférable d'utiliser des antennes directionnelles car elles présentent un gain de directivité dans une direction donnée plus important ce qui permet de concentrer toute la puissance de transmission vers le terminal récepteur.

Enfin, dans un réseau mobile, les noeuds se déplacent au cours du temps ce qui pose le problème de la ré-allocation dynamique des ressources radio par la méthode d'accès. La méthode doit être notamment capable de prendre en compte, le plus efficacement possible, de fréquents changements de topologie afin de couvrir les besoins de communication des noeuds.

La présente invention propose notamment une méthode d'accès multiple adaptée au partage efficace de ressources au sein d'un réseau ad hoc mobile. Chaque plateforme se voit allouer une bande de fréquence qu'elle gère par une méthode d'accès CDMA pour recevoir simultanément les signaux issus d'autres plateformes. En émission, chaque plateforme utilise un code alloué par le destinataire pour transmettre dans la bande de fréquence de ce dernier.
La méthode d'accès proposée diffère des méthodes d'accès TDMA ou TDD (« Time Division Duplexing ») dans le sens où elle n'introduit pas de temps de latence lié à l'attente d'une ressource radio pour émettre.
La méthode d'accès selon l'invention permet de limiter les inconvénients liés à plusieurs méthodes d'accès de l'art antérieur.
- L'utilisation de codes d'étalements selon une méthode CDMA permet de limiter la perte due aux bandes de garde requises pour une méthode FDMA de l'art antérieur
   En effet, la méthode selon l'invention permet de multiplexer plusieurs liens au sein de chaque bande limitant ainsi le nombre de bandes nécessaires.
- L'utilisation de bandes de fréquences de réception distinctes allouées à chaque noeud du réseau permet de limiter le problème du « near-far effect » introduit par les méthodes d'accès CDMA. En effet, le fait de séparer les transmissions de sorte que dans une bande donnée il n'a qu'un seul récepteur évite par construction le problème du « near-far effect ».
La méthode d'accès proposée met également en oeuvre des mécanismes de réutilisation spatiale des bandes de fréquence.

L'invention s'applique notamment dans le cadre des limitations suivantes :
- Le nombre de bandes fréquentielles disponibles est supérieur ou égal au nombre de participants du réseau.
- Il n'y a pas de réutilisation spatiale des bandes de fréquences.

L'invention permet également de lever ces limitations et propose d'augmenter le nombre potentiel d'utilisateurs du réseau en réutilisant les bandes de fréquence sur plusieurs plateformes du réseau. Pour que le partage de ces bandes soit le plus efficace possible, un algorithme d'allocation dynamique des bandes fréquentielles est utilisé dans le but de minimiser les interférences entre chaque plateforme réutilisant une même bande de fréquence. L'allocation des bandes fréquentielles se fait sur la base d'un réseau établi construit au préalable par un algorithme de construction du réseau. De cette façon, deux noeuds qui possèdent un lien de transmission entre eux se voient attribuer des bandes de fréquence de réception différentes. En cas de réutilisation d'une bande de fréquence, une vérification est faite de sorte que le niveau de perturbation induit par un lien sur un autre reste en dessous d'un seuil prédéfini. Cette vérification élimine ainsi également le problème du « near far effect ».

La réutilisation des bandes de fréquence dans un réseau mobile implique de fréquents changements de bande. Ces changements doivent s'effectuer sans temps mort afin de garder la propriété de pouvoir transmettre sans latence importante à n'importe quel instant. Un mécanisme de changement de fréquence synchrone, également connu en anglais sous le terme « handover », est proposé.

L'invention est avantageusement applicable pour des antennes directives qui permettent d'obtenir des débits et portées importants. La méthode proposée tire parti de la directivité des antennes pour augmenter la réutilisation spatiale des bandes de fréquences et augmenter ainsi le débit total dans le réseau ad-hoc.

L'invention a pour objet une méthode d'accès multiple aux ressources radio dans un réseau ad-hoc mobile comportant une pluralité de terminaux ou noeuds mobiles communiquant, de coordonnées géographiques connues caractérisée en ce qu'elle comporte au moins les étapes suivantes :
∘ une étape de construction dudit réseau permettant de générer une pluralité de liens actifs entre au moins deux noeuds actifs dudit réseau, un lien actif étant composé de deux paires de canaux, affectés respectivement à l'émission et à la réception, comportant chacun un sous-canal de signalisation et un sous-canal de communication, un lien étant activé lorsque le degré de pertinence dudit lien est supérieur à une constante donnée, le degré de pertinence dudit lien étant déterminé au moins en fonction de critères de distance entre lesdits noeuds et/ou de critères de priorité entre lesdits noeuds, chacun desdits noeuds actifs dudit réseau comportant une table de voisinage qui regroupe l'ensemble des noeuds actifs dudit réseau auquel il est directement relié par un lien actif,
∘ une étape d'allocation de bandes de fréquence de réception à chacun desdits noeuds actifs dudit réseau, lesdites bandes de fréquence étant de largeur identiques et espacées d'une bande de garde minimum donnée, ladite allocation étant effectuée de la façon suivante :
   ▪ si le nombre de noeuds actifs dudit réseau est inférieur ou égal au nombre de bandes de fréquences disponibles, une bande de fréquence de réception différente est allouée à chacun desdits noeuds,
   ▪ si le nombre de noeuds actifs dudit réseau est strictement supérieur au nombre de bandes de fréquences disponibles, une réutilisation desdites bandes de fréquences est faite de telle sorte que l'allocation soit effectuée de façon à minimiser les interférences entre deux noeuds actifs qui ont la même bande de fréquence de réception,
∘ une étape d'allocation de code d'étalement effectuée par chacun desdits noeuds actifs récepteur dudit réseau pour chacun desdits noeuds émetteurs voisins auquel il est directement relié par un lien actif selon une méthode CDMA asynchrone, lesdits noeuds émetteurs voisins communiquant avec ledit noeud récepteur dans la bande de fréquence de réception qui lui a été allouée,
∘ une étape de contrôle de puissance effectuée par chacun desdits noeuds récepteur dudit réseau pour chacun desdits noeuds émetteurs voisins auquel il est directement relié par un lien actif, ladite étape de contrôle de puissance mettant en oeuvre une boucle de régulation de puissance différente pour chacun desdits liens actifs émanant dudit noeud récepteur ayant pour fonction d'assurer que tous les signaux reçus par ledit noeud récepteur en provenance desdits noeuds émetteurs le sont avec le même niveau de puissance.

Dans une variante de réalisation de l'invention, la même bande de fréquence de réception est allouée à une pluralité de noeuds actifs distincts si et seulement si le niveau de perturbation induit par un lien actif d'un desdits noeuds sur un lien actif d'un autre desdits noeuds est inférieur à un seuil donné.

Dans une variante de réalisation de l'invention, un changement de bande de fréquence de réception d'un noeud dudit réseau est effectué en cours de transmission et ce changement est annoncé aux autres noeuds dudit réseau à l'aide de messages d'annonce contenant au moins l'instant du changement et la nouvelle bande de fréquence.

Dans une variante de réalisation de l'invention, chacun desdits noeuds tient à jour une base de données géographiques comportant ses coordonnées géographiques ainsi que celle des noeuds de sa table de voisinage, lesdites coordonnées géographiques étant fournies par un mécanisme externe audit réseau tel qu'une forme d'onde omnidirectionnelle longue portée, une liaison de données tactiques ou un système de radar.

Dans une variante de réalisation de l'invention, chacun desdits noeuds tient à jour une base de données géographiques comportant ses coordonnées géographiques ainsi que celle des noeuds de sa table de voisinage, ladite base étant construite et maintenue à l'aide de messages de signalisation dédiés à cet effet et transmis entre les noeuds dudit réseau.

Dans une variante de réalisation de l'invention, l'accès aux ressources radio d'un nouveau noeud entrant dans ledit réseau est réalisé à l'aide au moins des étapes suivantes :
∘ ledit noeud entrant sélectionne aléatoirement une bande de fréquence de réception parmi celles disponibles,
∘ ledit noeud entrant transmet au moins un message d'entrée dans le réseau dans chacune des bandes de fréquence disponibles avec une puissance d'émission dont le niveau augmente progressivement jusqu'à obtention d'une réponse, ledit message d'entrée contenant au moins la position géographique dudit noeud entrant, sa vitesse, son accélération et sa bande de fréquence de réception,
∘ sur réception d'un message d'entrée dans le réseau, un noeud destinataire met à jour au moins sa base de données géographique et sa table de voisinage et répond par un message de réponse transmis dans la bande de fréquence de réception contenue dans ledit message d'entrée dans le réseau avec une puissance d'émission calculée au moins en fonction de la distance entre ledit noeud entrant et ledit noeud destinataire, ledit message de réponse contenant au moins la position géographique dudit noeud destinataire, sa vitesse, son accélération et sa bande de fréquence de réception,
∘ sur réception d'un message de réponse, ledit noeud entrant dans le réseau met à jour au moins sa base de données géographique et sa table de voisinage.

Dans une variante de réalisation de l'invention, l'envoi desdits messages d'entrée dans le réseau et de réponse se fait en contention d'accès, en utilisant un code d'étalement unique connu de tous les noeuds du réseau.

L'invention a également pour objet un système de communication embarqué sur un noeud mobile communiquant au sein d'un réseau ad-hoc mobile caractérisé en ce qu'il comprend au moins une base de données géographiques en trois dimensions et un processeur de traitement adaptés à mettre en oeuvre les étapes de la méthode d'accès multiple aux ressources radio définie précédemment.

L'invention a également pour objet un réseau ad-hoc mobile comprenant une pluralité de noeuds mobiles, caractérisé en ce que lesdits noeuds embarquent un tel système de communication pour l'accès multiple aux ressources radio au sein dudit réseau.

Dans une variante de réalisation de l'invention, lesdits noeuds mobiles sont des aéronefs.

D'autres caractéristiques apparaîtront à la lecture de la description détaillée donnée à titre d'exemple et non limitative qui suit faite en regard de dessins annexés qui représentent :
La figure 1, un schéma illustrant le principe général de la méthode d'accès selon l'invention,
La figure 2, un synoptique fonctionnel d'un système comprenant deux noeuds et mettant en oeuvre la méthode d'accès selon l'invention,
La figure 3, un schéma illustrant la connectivité entre plusieurs noeuds d'un réseau pour lequel s'applique l'invention,
La figure 4, un exemple de réseau maillé mettant en oeuvre la méthode selon l'invention,
Les figures 5 et 6, deux schémas illustrant la gestion d'un changement d'allocation de fréquence dynamique,
La figure 7, un schéma illustrant le contrôle de puissance mis en oeuvre avec deux types d'antennes différents.

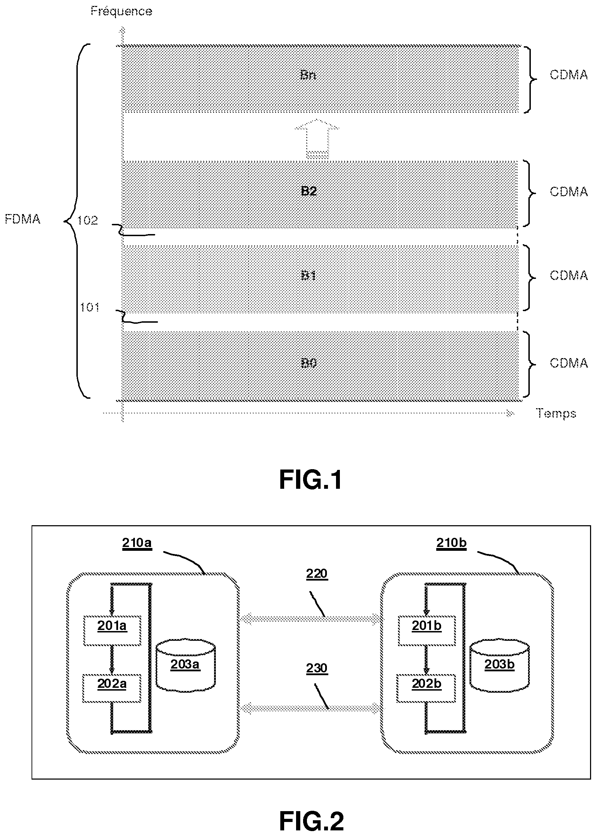

La figure 1 illustre sur un diagramme temps/fréquence le principe de la méthode d'accès multiple selon l'invention. L'invention utilise un nombre donné de bandes de fréquences de largeur identiques B0, B1, B2, Bn espacées au minimum par une bande de garde δB 101,102 de largeur déterminée afin d'assurer un niveau d'interférence entre bandes acceptable, c'est-à-dire inférieur à un seuil d'interférence donné. A l'intérieur de chacune de ces bandes B0, B1, B2, Bn, la communication est organisée dynamiquement en utilisant une méthode d'accès multiple par répartition en codes (CDMA) asynchrone. Les codes utilisés, par exemple des codes de type Gold ou Kasami connus de l'Homme du métier, sont construits à partir de séquences pseudo-aléatoires et possèdent un bon coefficient d'orthogonalité entre eux quel que soit le décalage temporel entre les différentes transmissions.

Chaque noeud du réseau se voit attribuer une de ces bandes fréquentielles B0, B1, B2, Bn qu'il utilise ensuite uniquement en réception. C'est ce noeud récepteur qui gère ensuite l'accès aux ressources radio de tous les autres noeuds qui communiquent avec lui sur la fréquence allouée. Notamment ce noeud récepteur gère l'allocation de codes et de débits pour les noeuds qui émettent vers lui, il gère également les boucles de contrôle de puissance.

Les bandes de fréquences B0, B1, B2, Bn, peuvent être réutilisées par plusieurs noeuds sous les conditions suivantes :
- Les codes utilisés par ces noeuds possèdent un bon coefficient d'orthogonalité,
- Le niveau de puissance d'un code reçu par un noeud qui n'est pas le destinataire de la communication ne doit pas dépasser un seuil donné.

Le duplexage utilisé est fréquentiel uniquement. Pour un noeud donné, la transmission n'est possible que hors de la bande de fréquence allouée pour la réception. Ceci entraine des contraintes sur les possibilités de communication directe. De plus, en cas de réutilisation de fréquence, plusieurs noeuds possédant la même bande de réception peuvent être amenés à établir un lien entre eux. Deux solutions sont alors possibles. La première consiste à établir une communication indirecte entre ces noeuds par l'intermédiaire d'un routage via des noeuds tiers. La seconde consiste à établir une communication directe en réallouant de nouvelles bandes de fréquence sur la base des liens du réseau établi.

La figure 2 schématise fonctionnellement les éléments nécessaires à la mise en oeuvre de la méthode d'accès selon l'invention.
Un premier noeud mobile 210a du réseau, qui peut être un aéronef dans le cas d'un réseau aéronautique ou tout autre terminal mobile capable de communiquer avec un tiers, communique avec un second noeud mobile 210b à travers un lien de trafic 230 dont la fonction est l'échange de données utiles et un lien de signalisation 220 dont la fonction est l'échange de messages permettant la gestion globale du réseau. Chacun de ces noeuds 210a, 210b comporte un processeur qui exécute, en permanence, un procédé 201a, 201b de construction du réseau selon l'invention qui fournit des informations sur l'état du réseau à un procédé 202a, 202b d'allocation de fréquences selon l'invention. Ces deux procédés sont continuellement alimentés par une base de données géographique en trois dimensions 203a, 203b qui met à jour et délivre en permanence la position géographique, les vecteurs vitesse et accélération de l'ensemble des noeuds voisins. La connaissance de ces paramètres spatiaux temporels à un instant t permet d'estimer la position des noeuds voisins à un instant t' > t. La base de données géographiques 3D 203a, 203b est alimentée périodiquement avec une période minimale donnée. Cette alimentation peut être effectuée de différentes façons. Des messages de signalisation 220 peuvent être dédiés à cet effet pour supporter ainsi les mécanismes de gestion de la base 203a, 203b de façon autonome. Les coordonnées géographiques des noeuds peuvent également être vues comme des données d'entrée fournies par des mécanismes externes tels qu'une liaison omnidirectionnelle longue portée, une liaison de données tactiques ou encore le système de radar d'un avion.

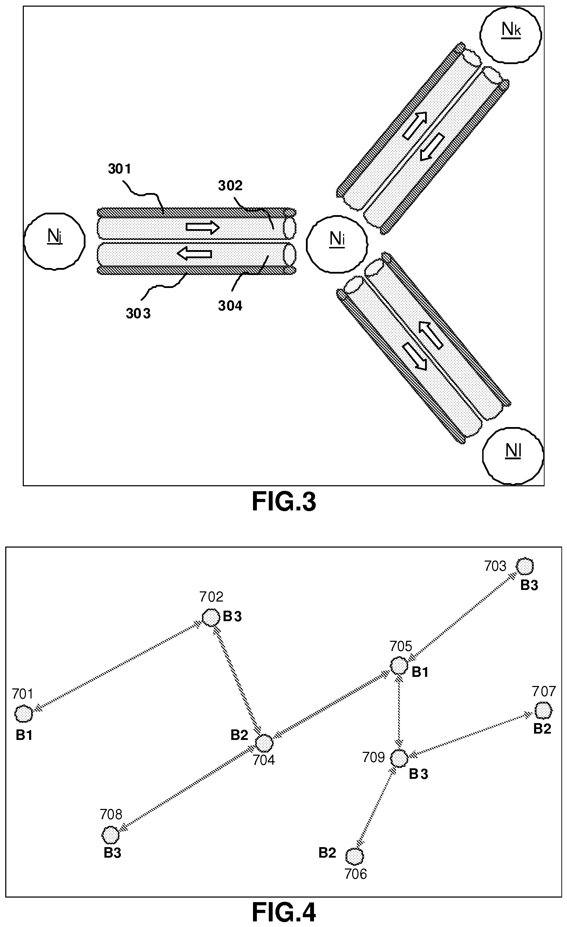

La figure 3 illustre le mécanisme de construction du réseau mettant en oeuvre la méthode d'accès selon l'invention. Chaque noeud Ni, Nj, Nk, Nl exécute un algorithme distribué de construction du réseau. Cet algorithme est responsable de la gestion dynamique des liens de communication entre les différents noeuds du système. Un lien entre deux noeuds est toujours bidirectionnel et composé de quatre canaux. Dans chaque sens (émission/réception), un canal de trafic 302,304 et un canal de signalisation 301,303 sont utilisés. Pour chacun de ces canaux 301, 302, 303,304 un code d'étalement ou code basé sur une séquence PN et un niveau de puissance sont alloués. Tout noeud du système Ni, Nj, Nk, Nl, a la possibilité d'établir un certain nombre n de liens de communication, le nombre de liens maximum étant propre à chaque noeud et étant déterminé en fonction de ses capacités antennaires et de ses capacités de réception en terme de nombre de codes traités parallèlement. L'ensemble des liens établis à l'aide de l'algorithme de construction du réseau, à un instant t, définit la topologie du réseau. Tout noeud Ni communique avec un sous-ensemble de noeuds Nj, Nk, Nl du système via ses n liens actifs. Eventuellement, des noeuds intermédiaires peuvent assurer la fonction de routage.
- L'algorithme de construction du réseau fabrique un graphe couvrant tous les noeuds du système à portée radio. Il s'exécute en permanence, la connectivité, c'est-à-dire les liens actifs entre noeuds, changeant continuellement. Tout lien entre deux noeuds du réseau dont le degré de pertinence est supérieur à une constante donnée est établi. Le degré de pertinence est calculé en fonction de différents critères dynamiques et/ou statiques, locaux et/ou reçus. Les différents critères utilisés peuvent être pondérés pour élaborer le calcul final du degré de pertinence. Les critères utilisés peuvent également varier d'un type de plateforme à un autre. Les critères utilisés sont par exemple, mais pas uniquement des critères géographiques tels que la proximité de deux noeuds du réseau entre lesquels un lien peut être établi. Plus un lien est court, plus il sera pertinent.
- un lien entre deux noeuds peut être défini comme obligatoire pour des raisons propres au système. Dans ce cas ce lien aura un degré de pertinence maximal dès que les noeuds sont à portée radio l'un de l'autre.

Une fois le réseau construit, chaque noeud Ni du système exécute un algorithme distribué selon l'invention d'allocation dynamique des bandes de fréquence en réception. La méthode consiste à allouer de façon distribuée les bandes de fréquence en réception aux différents noeuds du système avec pour objectif de minimiser les interférences liées à la réaffectation des bandes de fréquence à différents noeuds. La méthode prend en compte la mobilité/restructuration du réseau en réallouant dynamiquement des fréquences dans le but de maintenir les liens établis.

Deux cas de figure se distinguent. Le premier cas correspond à un scénario pour lequel le nombre de noeuds constituant le réseau est inférieur au nombre de bandes de fréquences disponibles. Dans ce cas, l'allocation en fréquence ne nécessite pas de réutilisation de certaines bandes fréquentielles, la solution est optimale et peut être exécutée via un algorithme distribué ou simplement par configuration statique.

Le second cas nécessite une solution plus élaborée. Il s'agit du cas où le nombre de noeuds est cette fois supérieur au nombre de bandes de fréquences disponibles. Dans ce cas le but de l'allocation de fréquence est de minimiser les interférences entre deux noeuds qui possèdent la même bande de fréquence de réception. Une méthode possible pour cela consiste à se ramener au problème connu en théorie des graphes de la k-colorisation d'un graphe planaire. Cette méthode consiste à affecter une bande de fréquences à chaque noeud avec la contrainte que deux noeuds voisins n'ont pas la même bande de fréquences.

Un exemple de construction de réseau et d'allocation de bandes de fréquence en réception est illustré à la figure 4. Trois bandes de fréquences B1, B2, B3 sont disponibles et doivent être allouées à 9 noeuds distincts qui possèdent des liens actifs entre eux définis par un mécanisme de construction du réseau.
Le noeud 701 reçoit des données du noeud 702 dans la bande de fréquence B1.
Le noeud 702 reçoit des données des noeuds 701 et 704 dans la bande B3. Le noeud 703 reçoit des données du noeud 705 dans la bande B3.
Le noeud 704 reçoit des données des noeuds 702,705 et 708 dans la bande B2.
Le noeud 705 reçoit des données des noeuds 703,704 et 709 dans la bande B1.
Le noeud 706 reçoit des données du noeud 709 dans la bande B2.
Le noeud 707 reçoit des données du noeud 709 dans la bande B2.
Le noeud 708 reçoit des données du noeud 704 dans la bande B3.
Le noeud 709 reçoit des données des noeuds 705,706 et 707 dans la bande B3.
Deux noeuds voisins du réseau n'ont pas la même bande de fréquence de réception afin de limiter le niveau de perturbation. Un noeud est voisin d'un autre au sein du réseau s'ils sont directement liés par un lien actif.

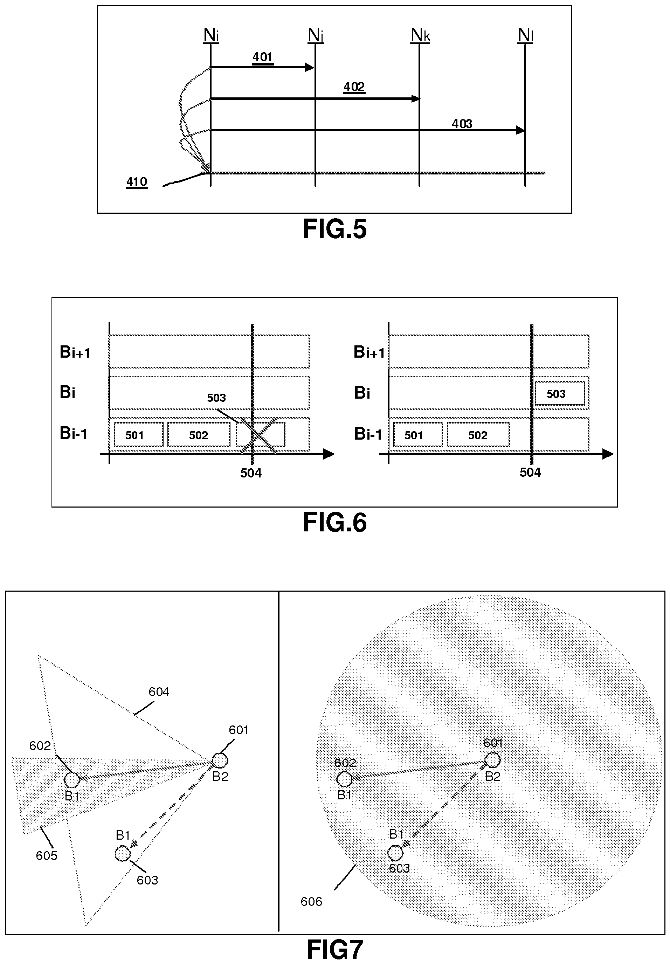

Les algorithmes de construction du réseau et d'allocation dynamique des bandes de fréquences définissent respectivement des changements, connus également sous le terme anglais « handover », de liens entre noeuds et des changements de bande de fréquence en réception. Les changements de liens entre noeuds peuvent intervenir, par exemple, lorsque deux noeuds qui ont un lien établi s'éloignent trop fortement l'un de l'autre, le mécanisme de construction du réseau régénère alors de nouveaux liens. Les changements de bande de fréquence de réception interviennent, par exemple, lorsque deux noeuds qui communiquent en réception sur la même bande fréquentielle se rapprochent l'un de l'autre ce qui peut créer un niveau d'interférence trop important.
Lorsqu'un changement est décidé par un noeud donné, ce noeud propage des messages d'annonce, via son canal de signalisation, à l'ensemble des noeuds du système qui sont concernés. Le message d'annonce contient, par exemple, la date à laquelle le changement doit avoir lieu ainsi que des informations telles qu'une nouvelle bande de fréquence, un niveau de puissance ou un code PN. La figure 5 illustre l'envoi de messages d'annonce 401, 402,403 par un noeud Ni à ses voisins Nj, Nk, Nl annonçant le futur changement 410 de lien ou de fréquence.

Les noeuds émetteurs doivent s'assurer que la transmission d'un paquet de données n'intervient pas pendant un changement de bande de fréquence, tel qu'illustré sur la partie gauche de la figure 6. Une transmission est en cours dans la bande de fréquence Bᵢ₋₁ pour laquelle les paquets de données 501,502 ont déjà été transmis, le paquet 503 ne peut pas être en cours de transmission lorsqu'un changement 504 de bande Bᵢ₋₁ vers Bᵢ intervient. La partie de droite de la figure 6 montre que le noeud émetteur doit attendre le changement de bande de fréquence 504 du noeud récepteur avant de transmettre le paquet de données 503.
Afin de n'introduire aucune latence dans la communication, il est possible, dans une variante de réalisation de l'invention, que chaque noeud possède la capacité de recevoir sur deux bandes Bᵢ₋₁, Bi simultanément durant la période du changement. L'ancien lien n'est alors rompu que lorsque le nouveau est pleinement opérationnel.

Dans les systèmes de communication mobile basés sur un réseau comportant une infrastructure et mettant en oeuvre une méthode d'accès multiple par répartition en code (CDMA), comme par exemple les systèmes UMTS, chaque noeud du réseau n'émet que sur un seul canal, appelé canal montant, vers une seule destination qui est appelée station de base. Cette dernière se charge d'effectuer le relais des messages vers des noeuds plus éloignés. Dans un tel réseau, chaque noeud ne met en oeuvre qu'une seule boucle de régulation de puissance.
Dans le système selon l'invention, au contraire, chaque noeud du système peut communiquer avec plusieurs noeuds destinataires, ces derniers organisant un accès aux ressources radio par répartition en code (CDMA) en réception dans des bandes de fréquence différentes et à des distances différentes du noeud émetteur. Par conséquent, tout noeud du système met en oeuvre n boucles de régulation de puissance, n étant le nombre de liens actifs directs qui relient ce noeud à ses voisins. En effet, tous les signaux ayant pour destination un même noeud doivent être reçus à un niveau de puissance le plus proche du niveau requis, tout signal s'ajoutant aux interférences subies par les autres signaux. Les boucles de régulation de puissance mises en oeuvre par un noeud ont donc pour fonction d'adapter les puissances d'émission en fonction du bilan de liaison des liens actifs qui le relient aux noeuds destinataires. Le bilan de liaison dépend notamment des distances relatives entre chaque noeud. La boucle de contrôle de puissance est d'autant plus réactive que les vitesses relatives des noeuds sont importantes afin de rester compatible d'un réseau fortement mobile.
A titre d'exemple la figure 7 illustre une boucle de contrôle mise en oeuvre entre deux noeuds 601 et 602 dans une bande de fréquence en réception égale à B1. Elle montre également les interférences induites par le noeud 601 sur le noeud 603 qui utilise également la bande de fréquence B1 en réception au même titre que le noeud 602. Les noeuds 602 et 603 sont situés à égales distances du noeud émetteur 601. La partie gauche de la figure 7 montre le cas où une antenne directive est utilisée par le noeud émetteur 601, dans ce cas le signal 605 émis à destination du noeud 602 est plus faiblement reçu 604 par le noeud voisin 603. Par contre dans le cas où une antenne omnidirectionnelle est utilisée par le noeud émetteur 601, comme cela est illustré sur la partie droite de la figure 7, le signal émis 606 est reçu avec la même amplitude par le noeud destinataire 602 et le noeud voisin 603.

Un cas particulier de l'invention intervient dans le cas où la base de données géographiques 3D est mise à jour par le biais de messages de signalisation et lorsqu'un terminal mobile fait son entrée dans le réseau qui a été précédemment établi. Un protocole d'entrée dans le réseau doit donc être mis en oeuvre. Ce protocole est basé sur l'utilisation de messages d'entrée dans le réseau. Ces messages sont envoyés en contention d'accès, en utilisant un code unique connu et décodé par tous. Le terminal entrant dans le réseau sélectionne aléatoirement une bande de fréquence de réception, parmi celles disponibles, qu'il pourra faire évoluer dans le temps jusqu'à obtenir au moins une réponse en provenance d'un autre noeud. Il transmet des messages d'entrée dans le réseau dans chacune des bandes de fréquence du système afin d'avoir une chance de joindre au moins un noeud voisin. Pour les noeuds utilisant des antennes directives, l'envoi de messages d'entrée dans le réseau se fait successivement dans différents secteurs de l'espace de manière à obtenir une couverture omnidirectionnelle. Afin de ne pas éblouir des noeuds proches qui utiliseraient en réception la bande de fréquence d'un message d'entrée dans le réseau, ces messages sont envoyés en utilisant d'abord une puissance réduite qui augmente au fur et à mesure jusqu'à l'obtention d'une réponse. Tout message d'entrée dans le réseau contient au minimum la position géographique du noeud émetteur, ses vecteurs vitesse et accélération ainsi que sa bande de fréquence en réception. Sur réception d'un message d'entrée dans le réseau, le noeud destinataire met à jour ses structures de données dont sa base de données géographiques 3D et sa table de voisinage.
Tout noeud ayant reçu un message d'entrée dans le réseau répond par un message réponse qui est transmis dans la bande de fréquence définie dans le message d'entrée dans le réseau. La puissance d'émission du message réponse est calculée en fonction de la distance des noeuds source et destinataire et du niveau de puissance requis à la réception de ce type de message. La distance entre les deux noeuds se calcule en fonction des informations géographiques du noeud émetteur du message réponse et de celles reçues dans le message d'entrée dans le réseau initial. Ces informations sont extraites de la base de données géographiques 3D. Le message réponse contient les positions géographiques, les vecteurs vitesse et accélération ainsi que la bande de fréquence de réception des noeuds connus du noeud émetteur. Sur réception du message réponse, le noeud destinataire met à jour ses différentes structures de données dont sa base de données géographique 3D et sa table de voisinage.

L'invention a pour avantage, grâce à la méthode d'accès multiple proposée, de permettre une allocation optimale des ressources en termes de temps de latence et de bande passante disponible entre les différents utilisateurs d'un réseau ad-hoc mobile. La latence d'une transmission point à point entre deux noeuds du réseau est réduite car l'accès à la ressource spectrale par un utilisateur n'est pas contraint dans le temps contrairement aux techniques d'accès multiple à répartition dans le temps.

De plus l'invention présente également l'avantage de coupler deux fonctions, à savoir une méthode d'accès multiple et une méthode de discrétion en utilisant le même mécanisme, ce qui permet de redistribuer la capacité non utilisée en cas de discrétion, c'est-à-dire de puissance réduite, aux autres utilisateurs. En effet, le signal émis par un terminal peut être rendu discret en diminuant la puissance d'émission et en augmentant le facteur d'étalement qui est un paramètre de la méthode d'accès CDMA. A titre d'exemple, un facteur d'étalement égal à 10 entraine le codage d'un bit utile par 10 créneaux (ou « chips » en anglais) du code d'étalement utilisé. L'énergie totale rayonnée est répartie dans la bande de fréquence utile et la densité de puissance par Hertz du signal émis est 10 fois plus faible avant l'opération de dés-étalement en réception. Le signal étalé est donc plus difficilement détectable par un tiers. Chaque plate forme peut décider de son degré de discrétion indépendamment des autres, la baisse de capacité engendrée par un besoin de discrétion accru étant redistribuée aux autres utilisateurs partageant la même bande de fréquence.

L'invention permet également de gérer dynamiquement l'allocation des bandes fréquentielles allouées à la réception pour chaque noeud du réseau en fonction de l'évolution spatiale de ce réseau. En particulier lorsque deux terminaux fonctionnant à la même fréquence de réception se rapprochent l'un de l'autre, une réallocation du plan de fréquence est mise en oeuvre.

## Revendications

1. Méthode d'accès multiple aux ressources radio dans un réseau ad-hoc mobile comportant une pluralité de terminaux ou noeuds mobiles Ni, Nj, Nk, Nl communiquant, de coordonnées géographiques connues **caractérisée en ce qu'**elle comporte au moins les étapes suivantes :
∘ une étape de construction dudit réseau permettant de générer une pluralité de liens actifs entre au moins deux noeuds Ni,Nj,Nk,Nl actifs dudit réseau, un lien actif étant composé de deux paires de canaux, affectés respectivement à l'émission et à la réception, comportant chacun un sous-canal de signalisation (301,303) et un sous-canal de communication (302,304), un lien étant activé lorsque le degré de pertinence dudit lien est supérieur à une constante donnée, le degré de pertinence dudit lien étant déterminé au moins en fonction de critères de distance entre lesdits noeuds et/ou de critères de priorité entre lesdits noeuds, chacun desdits noeuds Ni actifs dudit réseau comportant une table de voisinage qui regroupe l'ensemble des noeuds actifs Nj,Nk,Nl dudit réseau auquel il est directement relié par un lien actif,
∘ une étape d'allocation de bandes de fréquence de réception B0, B1 ,B2, Bn à chacun desdits noeuds actifs dudit réseau, lesdites bandes de fréquence B0, B1 ,B2, Bn étant de largeur identiques et espacées d'une bande de garde minimum donnée δB, ladite allocation étant effectuée de la façon suivante :
▪ si le nombre de noeuds actifs dudit réseau est inférieur ou égal au nombre de bandes de fréquences B0, B1, B2, Bn disponibles, une bande de fréquence de réception différente est allouée à chacun desdits noeuds,
▪ si le nombre de noeuds actifs dudit réseau est strictement supérieur au nombre de bandes de fréquences B0, B1, B2, Bn disponibles, une réutilisation desdites bandes de fréquences est faite de telle sorte que l'allocation soit effectuée de façon à minimiser les interférences entre deux noeuds actifs qui ont la même bande de fréquence de réception,
∘ une étape d'allocation de code d'étalement effectuée par chacun desdits noeuds actifs récepteur Ni dudit réseau pour chacun desdits noeuds émetteurs Nj,Nk,Nl voisins auquel il est directement relié par un lien actif selon une méthode CDMA asynchrone, lesdits noeuds émetteurs Nj,Nk,Nl voisins communiquant avec ledit noeud récepteur Ni dans la bande de fréquence Bi de réception qui lui a été allouée,
∘ une étape de contrôle de puissance effectuée par chacun desdits noeuds récepteur Ni dudit réseau pour chacun desdits noeuds émetteurs Nj,Nk,NI voisins auquel il est directement relié par un lien actif, ladite étape de contrôle de puissance mettant en oeuvre une boucle de régulation de puissance différente pour chacun desdits liens actifs émanant dudit noeud récepteur Ni ayant pour fonction d'assurer que tous les signaux reçus par ledit noeud récepteur Ni en provenance desdits noeuds émetteurs Nj,Nk,Nl le sont avec le même niveau de puissance.

2. Méthode d'accès multiple selon la revendication 1 **caractérisée en ce que** la même bande de fréquence de réception est allouée à une pluralité de noeuds actifs distincts si et seulement si le niveau de perturbation induit par un lien actif d'un desdits noeuds sur un lien actif d'un autre desdits noeuds est inférieur à un seuil donné.

3. Méthode d'accès multiple selon l'une des revendications précédentes **caractérisée en ce qu'**un changement de bande de fréquence de réception d'un noeud dudit réseau est effectué en cours de transmission et que ce changement est annoncé aux autres noeuds dudit réseau à l'aide de messages d'annonce contenant au moins l'instant du changement et la nouvelle bande de fréquence.

4. Méthode d'accès multiple selon l'une des revendications précédentes **caractérisée en ce que** chacun desdits noeuds tient à jour une base de données géographiques comportant ses coordonnées géographiques ainsi que celle des noeuds de sa table de voisinage, lesdites coordonnées géographiques étant fournies par un mécanisme externe audit réseau tel qu'une forme d'onde omnidirectionnelle longue portée, une liaison de données tactiques ou un système de radar.

5. Méthode d'accès multiple selon l'une des revendications 1 à 3 **caractérisée en ce que** chacun desdits noeuds tient à jour une base de données géographiques comportant ses coordonnées géographiques ainsi que celle des noeuds de sa table de voisinage, ladite base étant construite et maintenue à l'aide de messages de signalisation dédiés à cet effet et transmis entre les noeuds dudit réseau.

6. Méthode d'accès multiple selon la revendication 5 **caractérisée en ce que** l'accès aux ressources radio d'un nouveau noeud entrant dans ledit réseau est réalisé à l'aide au moins des étapes suivantes :
∘ ledit noeud entrant sélectionne aléatoirement une bande de fréquence de réception parmi celles disponibles,
∘ ledit noeud entrant transmet au moins un message d'entrée dans le réseau dans chacune des bandes de fréquence B0, B1 ,B2, Bn disponibles avec une puissance d'émission dont le niveau augmente progressivement jusqu'à obtention d'une réponse, ledit message d'entrée contenant au moins la position géographique dudit noeud entrant, sa vitesse, son accélération et sa bande de fréquence de réception,
o sur réception d'un message d'entrée dans le réseau, un noeud destinataire met à jour au moins sa base de données géographique et sa table de voisinage et répond par un message de réponse transmis dans la bande de fréquence de réception contenue dans ledit message d'entrée dans le réseau avec une puissance d'émission calculée au moins en fonction de la distance entre ledit noeud entrant et ledit noeud destinataire, ledit message de réponse contenant au moins la position géographique dudit noeud destinataire, sa vitesse, son accélération et sa bande de fréquence de réception,
∘ sur réception d'un message de réponse, ledit noeud entrant dans le réseau met à jour au moins sa base de données géographique et sa table de voisinage.

7. Méthode d'accès multiple selon la revendication 6 **caractérisée en ce que** l'envoi desdits messages d'entrée dans le réseau et de réponse se fait en contention d'accès, en utilisant un code d'étalement unique connu de tous les noeuds du réseau.

8. Système de communication embarqué sur un noeud mobile (210a, 210b) communiquant au sein d'un réseau ad-hoc mobile **caractérisé en ce qu'**il comprend au moins une base de données géographiques (203a, 203b) en trois dimensions et un processeur de traitement adaptés à mettre en oeuvre les étapes de la méthode d'accès multiple aux ressources radio selon l'une des revendications 1 à 7.

9. Réseau ad-hoc mobile comprenant une pluralité de noeuds mobiles (701-709), **caractérisé en ce que** lesdits noeuds embarquent un système de communication pour l'accès multiple aux ressources radio au sein dudit réseau selon la revendication 8.

10. Réseau ad-hoc mobile selon la revendication 9 **caractérisé en ce que** lesdits noeuds mobiles sont des aéronefs.

## Patentansprüche

1. Verfahren für Mehrfachzugang zu den Funkressourcen in einem mobilen Adhoc-Netzwerk, das mehrere kommunizierende Endgeräte oder mobile Knoten Ni, Nj, Nk, Nl mit bekannten geografischen Koordinaten umfasst, **dadurch gekennzeichnet, dass** es wenigstens die folgenden Schritte beinhaltet:
∘ einen Schritt des Aufbauens des Netzwerks, der es zulässt, mehrere aktive Verbindungen zwischen wenigstens zwei aktiven Knoten Ni, Nj, Nk, Nl des Netzwerks zu erzeugen, wobei eine aktive Verbindung aus zwei Kanalpaaren zusammengesetzt ist, jeweils zugeordnet zum Senden und Empfangen, die jeweils einen Signalisierungssubkanal (301, 303) und einen Kommunikationssubkanal (302, 304) umfassen, wobei eine Verbindung aktiviert wird, wenn der Grad an Relevanz der Verbindung größer ist als eine gegebene Konstante, wobei der Grad an Relevanz der Verbindung wenigstens in Abhängigkeit von Distanzkriterien zwischen den Knoten und/oder Prioritätskriterien zwischen den Knoten bestimmt wird, wobei jeder der aktiven Knoten Ni des Netzwerks eine Nachbarschaftstabelle umfasst, die die Gesamtheit der aktiven Knoten Nj, Nk, Nl des Netzwerks gruppiert, mit der es direkt durch eine aktive Verbindung verbunden ist,
∘ einen Schritt des Zuordnens von Empfangsfrequenzbändern B0, B1, B2, Bn zu jedem der aktiven Knoten des Netzwerks, wobei die Frequenzbänder B0, B1, B2, Bn identische Größen haben und von einem gegebenen Mindestschutzband δB beabstandet sind, wobei die Zuordnung auf die folgende Weise erfolgt:
▪ wenn die Anzahl von aktiven Knoten des Netzwerks gleich oder kleiner ist als die Anzahl von verfügbaren Frequenzbändern B0, B1, B2, Bn, dann wird jedem der Knoten ein anderes Empfangsfrequenzband zugeordnet,
▪ wenn die Anzahl von aktiven Knoten des Netzwerks strikt größer ist als die Anzahl von verfügbaren Frequenzbändern B0, B1, B2, Bn, dann erfolgt eine Wiederverwendung der Frequenzbänder so, dass die Zuordnung so erfolgt, dass die Interferenzen zwischen den beiden aktiven Knoten minimiert werden, die dasselbe Empfangsfrequenzband haben,
∘ einen Schritt des Zuordnens von Spreizcode, bewirkt durch jeden der aktiven Empfängerknoten Ni des Netzwerks für jeden der benachbarten Senderknoten Nj, Nk, Nl, mit dem er direkt durch eine aktive Verbindung gemäß einem asynchronen CDMA-Verfahren verbunden ist, wobei die benachbarten Senderknoten Nj, Nk, Nl mit dem Empfängerknoten Ni in dem ihm zugewiesenen Empfangsfrequenzband Bi kommunizieren,
∘ einen Schritt des Regelns von Leistung, bewirkt durch jeden der Empfängerknoten Ni des Netzwerks für jeden der benachbarten Senderknoten Nj, Nk, Nl, mit dem er durch eine aktive Verbindung direkt verbunden ist, wobei der Schritt des Regelns von Leistung für jede der aktiven Verbindungen einen anderen Leistungsregelkreis implementiert, die von dem Empfängerknoten Ni ausgeht, mit der Funktion zu gewährleisten, dass alle von dem Empfängerknoten Ni empfangenen Signale, die von den Senderknoten Nj, Nk, Nl kommen, denselben Leistungspegel haben.

2. Verfahren für Mehrfachzugang nach Anspruch 1, **dadurch gekennzeichnet, dass** dasselbe Empfangsfrequenzband mehreren getrennten aktiven Knoten zugeordnet wird, aber nur dann, wenn der von einer aktiven Verbindung eingeführte Störpegel von einem der Knoten auf einer aktiven Verbindung von einem anderen Knoten kleiner ist als eine gegebene Schwelle.

3. Verfahren für Mehrfachzugang nach einem der vorherigen Ansprüche, **dadurch gekennzeichnet, dass** eine Änderung des Empfangsfrequenzbandes von einem Knoten des Netzwerks im Laufe der Sendung erfolgt und dass die genannte Änderung den anderen Knoten des Netzwerks mit Hilfe von Ankündigungsnachrichten angekündigt wird, die wenigstens den Zeitpunkt der Änderung und das neue Frequenzband enthalten.

4. Verfahren für Mehrfachzugang nach einem der vorherigen Ansprüche, **dadurch gekennzeichnet, dass** jeder der Knoten eine geografische Datenbank aktualisiert, die ihre geografischen Koordinaten sowie die der Knoten ihrer Nachbartabelle umfasst, wobei die geografischen Koordinaten von einem Mechanismus außerhalb des Nertzwerks wie z.B. eine Form von omnidirektionaler Welle mit großer Reichweite, eine taktische Datenverbindung oder ein Radarsystem bereitgestellt werden.

5. Verfahren für Mehrfachzugang nach einem der Ansprüche 1 bis 3, **dadurch gekennzeichnet, dass** jeder der Knoten eine geografische Datenbank aktualisiert, die ihre geografischen Koordinaten sowie die der Nachbartabelle umfasst, wobei die Basis mit Hilfe von Signalisierungsnachrichten erstellt und geführt wird, die für diesen Zweck dediziert sind und zwischen den Knoten des Netzwerks übertragen werden.

6. Verfahren für Mehrfachzugang nach Anspruch 5, **dadurch gekennzeichnet, dass** der Zugang zu den Funkressourcen eines neuen in das Netzwerk eintretenden Knotens mit Hilfe von wenigstens den folgenden Schritten realisiert wird:
∘ der eintretende Knoten wählt zufällig ein Empfangsfrequenzband aus den verfügbaren Frequenzbändern,
∘ der eintretende Knoten sendet zufällig wenigstens eine Nachricht über das Eintreten in das Netzwerk in jedem der verfügbaren Frequenzbänder B0, B1, B2, Bn mit einer Sendeleistung, deren Pegel progressiv zunimmt, bis eine Antwort erhalten wird, wobei die Eintrittsnachricht wenigstens die geografische Position des eintretenden Knotens, seine Geschwindigkeit, seine Beschleunigung und sein Empfangsfrequenzband enthält,
∘ ein Zielknoten aktualisiert, bei Empfang einer Nachricht über den Eintritt in das Netzwerk, wenigstens seine geografische Datenbank und seine Nachbarschaftstabelle und antwortet mit einer Antwortnachricht, die in dem Empfangsfrequenzband gesendet wird, das in der Netzwerkeintrittsnachricht enthalten ist, mit einer Sendeleistung, die wenigstens in Abhängigkeit von der Distanz zwischen dem eintretenden Knoten und dem Zielknoten berechnet wird, wobei die Antwortnachricht wenigstens die geografische Position des Zielknotens, seine Geschwindigkeit, seine Beschleunigung und sein Empfangsfrequenzband enthält,
∘ der in das Netzwerk eintretende Knoten aktualisiert, bei Empfang einer Antwortnachricht, wenigstens seine geografische Datenbank und seine Nachbarschaftstabelle.

7. Verfahren für Mehrfachzugang nach Anspruch 6, **dadurch gekennzeichnet, dass** das Senden der Nachrichten des Eintritts in das Netzwerk und der Antwort mit Zugriffskonkurrenz unter Verwendung eines einzigen allen Knoten des Netzwerks bekannten Spreizcodes erfolgt.

8. Kommunikationssystem an Bord eines mobilen Knotens (210a, 210b), der im Innern eines mobilen Adhoc-Netzwerks kommuniziert, **dadurch gekennzeichnet, dass** er wenigstens eine geografische Datenbank (203a, 203b) in drei Dimensionen und einen Verarbeitungsprozessor umfasst, die zum Implementieren der Schritte des Verfahrens für Mehrfachzugang zu den Funkressourcen nach einem der Ansprüche 1 bis 7 ausgelegt sind.

9. Mobiles Adhoc-Netzwerk, das mehrere mobile Knoten (701-709) umfasst, **dadurch gekennzeichnet, dass** sich die Knoten an Bord eines Kommunikationssystems für den Mehrfachzugang zu den Funkressourcen im Innern des Netzwerks nach Anspruch 8 befinden.

10. Mobiles Adhoc-Netzwerk nach Anspruch 9, **dadurch gekennzeichnet, dass** die mobilen Knoten Flugzeuge sind.

## Claims

1. A method for multiple access to the radio resources in a mobile ad hoc network comprising a plurality of communicating mobile terminals or nodes Ni, Nj, Nk, Nl having known geographical coordinates, **characterised in that** it comprises at least the following steps:
∘ a step of constructing said network allowing a plurality of active links to be generated between at least two active nodes Ni, Nj, Nk, Nl of said network, an active link being formed by two pairs of channels, respectively assigned to transmission and to reception, each comprising a signalling sub-channel (301, 303) and a communication sub-channel (302, 304), a link being activated when the degree of pertinence of said link is greater than a given constant, the degree of pertinence of said link being determined at least as a function of criteria of distance between said nodes and/or of criteria of priority between said nodes, each of said active nodes Ni of said network comprising a neighbourhood table that consolidates all the active nodes Nj, Nk, Nl of said network with which it is directly linked by an active link;
∘ a step of allocating reception frequency bands B0, B1, B2, Bn to each of said active nodes of said network, said frequency bands B0, B1, B2, Bn having identical widths and being spaced apart by a given minimum guard band δB, said allocating being performed as follows:
▪ if the number of active nodes of said network is less than or equal to the number of available frequency bands B0, B1, B2, Bn, a different reception frequency band is allocated to each of said nodes;
▪ if the number of active nodes of said network is strictly greater than the number of available frequency bands B0, B1, B2, Bn, said frequency bands are reused so that the allocation is performed in order to minimise any interference between two active nodes that have the same reception frequency band;
∘ a step of allocating a spreading code performed by each of said receiver active nodes Ni of said network for each of said neighbour transmitter nodes Nj, Nk, Nl with which it is directly linked by an active link according to an asynchronous CDMA method, said neighbour transmitter nodes Nj, Nk, Nl communicating with said receiver node Ni in the reception frequency band Bi that has been allocated thereto;
∘ a step of controlling power performed by each of said receiver nodes Ni of said network for each of said neighbour transmitter nodes Nj, Nk, Nl with which it is directly linked by an active link, said step of controlling power implementing a different power control loop for each of said active links originating from said receiver node Ni that is intended to ensure that all the signals received by said receiver node Ni from said transmitter nodes Nj, Nk, Nl are received with the same level of power.

2. The multiple access method as claimed in claim 1, **characterised in that** the same reception frequency band is allocated to a plurality of distinct active nodes if, and only if, the level of disturbance induced by an active link of one of said nodes on an active link of another of said nodes is less than a given threshold.

3. The multiple access method as claimed in any one of the preceding claims, **characterised in that** a change of reception frequency band of a node of said network is performed during transmission and **in that** the other nodes of said network are notified of this change using notification messages containing at least the time of the change and the new frequency band.

4. The multiple access method as claimed in any one of the preceding claims, **characterised in that** each of said nodes keeps a geographical database up-to-date that comprises its geographical coordinates as well as that of the nodes of its neighbourhood table, said geographical coordinates being supplied by a mechanism outside said network, such as a long-range omnidirectional waveform, a tactical datalink or a radar system.

5. The multiple access method as claimed in any one of claims 1 to 3, **characterised in that** each of said nodes keeps a geographical database up-to-date that comprises its geographical coordinates as well as that of the nodes of its neighbourhood table, said database being constructed and maintained using signalling messages that are dedicated to this end and are transmitted between the nodes of said network.

6. The multiple access method as claimed in claim 5, **characterised in that** access to the radio resources of a new node entering said network is completed using at least the following steps of:
∘ said entering node randomly selecting a reception frequency band from those that are available,
∘ said entering node transmitting at least one network entry message in each of the available frequency bands B0, B1,B2, Bn with a transmission power that has a level that progressively increases until a response is obtained, said entry message containing at least the geographical position of said entering node, its speed, its acceleration and its reception frequency band;
∘ on receipt of a network entry message, an addressee node updating at least its geographical database and its neighbourhood table and responding, through a response message transmitted in the reception frequency band contained in said network entry message, with a transmission power that is computed at least as a function of the distance between said entering node and said addressee node, said response message containing at least the geographical position of said addressee node, its speed, its acceleration and its reception frequency band;
∘ on receipt of a response message, said node entering the network updating at least its geographical database and its neighbourhood table.

7. The multiple access method as claimed in claim 6, **characterised in that** the transmission of said network entry and response messages is performed under access contention, using a single spreading code that is known to all the nodes of the network.

8. A communication system on board a mobile node (210a, 210b) communicating within a mobile ad hoc network, **characterised in that** it comprises at least one three-dimensional geographical database (203a, 203b) and a processor adapted to implement the steps of the method for multiple access to the radio resources as claimed in any one of claims 1 to 7.

9. A mobile ad hoc network comprising a plurality of mobile nodes (701- 709), **characterised in that** said nodes have an on-board communication system for multiple access to the radio resources within said network as claimed in claim 8.

10. The mobile ad hoc network as claimed in claim 9, **characterised in that** said mobile nodes are aircraft.
